Europäisches Patentamt

European Patent Office

Office européen des brevets

(19)

(11) Publication number: **0 339 608**
**A2**

(12) **EUROPEAN PATENT APPLICATION**

(21) Application number: **89107553.3**

(51) Int. Cl.⁴: **G11B 11/10 , G11B 5/64**

(22) Date of filing: **26.04.89**

(30) Priority: **28.04.88 CN 88102222**

(43) Date of publication of application:
**02.11.89 Bulletin 89/44**

(84) Designated Contracting States:
**DE GB NL**

(71) Applicant: **INSTITUTE OF PHYSICS CHINESE ACADEMY OF SCIENCES**
**8 Nansanjie**
**Zhongguancun Haidian District Beijing(CN)**

(72) Inventor: **Yinjun, Wang**
**1508 Building 903**
**Zhongguancun Beijing 100080(CN)**
Inventor: **Jianxiang, Shen**
**613 Building 916**
**Zhongguancun Beijing 100080(CN)**
Inventor: **Qian, Tang**
**5-3-301 Tuanjiehu Road**
**Beijing(CN)**
Inventor: **Zhaohui, Li**
**901 Building 907**
**Zhongguancun Beijing 100080(CN)**

(74) Representative: **Patentanwälte Grünecker, Kinkeldey, Stockmair & Partner**
**Maximilianstrasse 58**
**D-8000 München 22(DE)**

(54) **An alloy material for data storage of magneto-optical disk and its manufacture process.**

(57) This invention relates to an Alloy Material for Data Storage of Mangeto-Optical disk (abbreviate as ADSMO), as well as its manufacture process. Said ADSMO is based on Manganese, Bismuth and doped with Aluminium atoms and Silicon atoms or by Aluminium atoms and Boron atoms. Above mentioned element is deposited onto a transparent substrate in a certain sequence using evaporation process or sputtering process, and then compaet hexagonal crystalline structures are formed after being annealed in vacuum. Said ADSMO has a large magneto-optical Kerr rotation, a small size of crystal grains and a stable structure; its manufacture process is easy and simple.

Fig. 3

## An Alloy Material for Data Storage of Magneto-Optical Disk and its Manufacture Process

### Background of the Invention

### Field of the invention

This invention relates to an alloy material for data storage and specifically to an alloy material for data storage of magneto-optical disk and its manufacture process. This material is characteristically based on MnBi alloy and doped with Al atoms and Si (or B) atoms. Said alloy material for data storage of magneto-opical disk in the present invention can overcome the shortcomings existing in various magneto-optical films conventionaly used at present and satisfy the requirements with respect to magento-optical disk for data storage and audio, video techniques.

### Description of Prior art

Presently, the development of computer and data storage technique needs such a material as being capable of storing large amount of data which can be written in or erased again and again by lasers while the data storage function does not vary. And the material will simultaneously provide the following features: i.e., it has a small signal-noise ratio (S/N) and it will not be affected by temperature variation, furthermore its preparing process is easy and simple.

For the time being, the magneto-optical disk is widely used and severed conventionally used materials for manufacturing magneto-optical disk are as follows:

(1) Amorphous crystal TbFeCo or GdTbFeCo. Such kind of materials has advantages such as amorphous state, i.e. atoms are not arranged in order, no crystal grains nor noise from grain boundaries. However, the magneto-optical disk manufactured with this kind of materials has a small signal-noise ratio S/N, because the S/N ratio is proportional to the magneto-optical Kerr rotation $\theta$ k of the material and TbFeCo or GdTbFeCo generally have magneto-optical Kerr rotation 0.35° -0.40° ; in addition, as this kind of materials is amorphous, after being heated, its ageing is very easy, it is unstable along with temperature variation; meanwhile, as this is a rare earth material, it is subject to oxidation and has a high cost.

(2) Ittrium Iron garnet YIG film. This material is crystalline, its drawback is that the growth temperature reaches up to 600°C. Hence, during its manufacture, anti-high temperature material such as quartz must be used as substrate. Besides, the grain size(d) of this material generally is larger, its surface is tougher, the application effect turns out to be not so good and it needs a high power laser to write in.

(3) Superlattice film. This is a requlating film of superposed layers interstitially made of transitional metal e.g. iron (Fe) and of rare earth metal such as Terbium (Tb) respectively. It is also an amorphous material. As it has many layers superimposed, its interior, specially its interface has internal strain and the crystal lattice between Iron (Fe) and Terbium (Tb) is mismatching; as a result, the magneto-optical disk manufactured with this material assumes unstationary, changeable performances in use and the Kerr rotation is small.

(4) Manganese Bismuth (MnBi) alloy film. This is a crystalline material as well, it has a larger magneto-optical Kerr rotation, around 0.7° . But its curie point Tc is high. In addition, when the material is quenched from 375°C (near curie point) to room temperature corresponding to the write-in or erase process of the magneto-optical disk, its Kerr rotation will drop significantly. The grain size(d) of Manganese Bismuth (MnBi) Alloy material is about a few microns, such large grain size leads to a decrease of the read-out signal/noise ratio of the magneto-optical disk. Because of the above mentioned reasons, the practical application of this material is almost impossible.

### Summary of the Invention

Prior art references relating to the present invention are given for example as follow:

(1) D. Chan et al. J. Appl. Phys. P.P. 1395, Vol, 41, No. 3, published on March 1, 1970.

(2) Morio Masuda, Japanese Journal of Appl. Phys. P.P. 707-712, Vol. 26, No. 5, published in May, 1987.

(3) D. Chen and Y. Gondo. J. Appl. Phys, P.P. 1024 Vol. 35, No. 3, published in March, 1964.

An object of the present invention is to overcome the forestated drawbacks existing in the above mentioned material so as to satisfy the requirement for data storage and audio, video techniques on magneto-optical disks;

Another object of the present invention is to provide a new type of alloy material for data storage of magneto-optical disks having larger magneto-optical Kerr rotation;

Another object of the present invention is to provide a new type of alloy meterial for data storage of magneto-optical disks having smaller crystal grain size(d);

Another further object of the present invention is to provide a new type of alloy material for data storage of magneto-optical disks having a larger signal/noise ratio(S/N);

Another further object of the present invention is to provide a new type of material for data storage of magneto-optical disk so that while being heated, e.g. at a temperature higher than the curie point, and while being quenched, the crystal structure of the material will be stable and unchanged;

Some other object of the present invention is to provide a manufacture process for the data storage material of the magneto-optical disks, i.e., first many kinds of crude materials are superimposed in sequ-ence, then at suitable temperatures, they are annealed.

The last object of the present invention is to provide the manufacturing materials for the data storage material of the magneto-optical disks, i.e., first many kinds of materials are periodically superimposed in sequence by vacuum sputtering, then they are annealed at suitable temperatures.

This manufacturing process of the present invention is easy and simple, it is suitable for large scale production and has lower cost. The data storage material manufactured by the present process has many excellent features, e.g. it has larger magmeto-optical rotation $\theta k$ at room temperature, when measurement wavelenth is 633nm, it reaches $2.5^\circ$,(wihtout any dielectric overcoat for purpose of Kerr rotation enhancement) six times larger than the magneto-optical Kerr rotation of amorphous material $\theta\ k\approx0.40$ . Its crystal grain size(d) is as small as 400 Å and thus it has a larger signal/noise rotio S/N. The X-ray measurement proves that said material has stable compact hexagonal crystalline structure with the c axis of the hexagon perpendicular to the base facet (002) of the hexagon; the crystal grain of the material surface is fine and compact having metallic brightness and higher reflectivity, furthermore, the characteristics of the material will not be affected by the variations of operating temperature.

## Brief Description of the Drawings

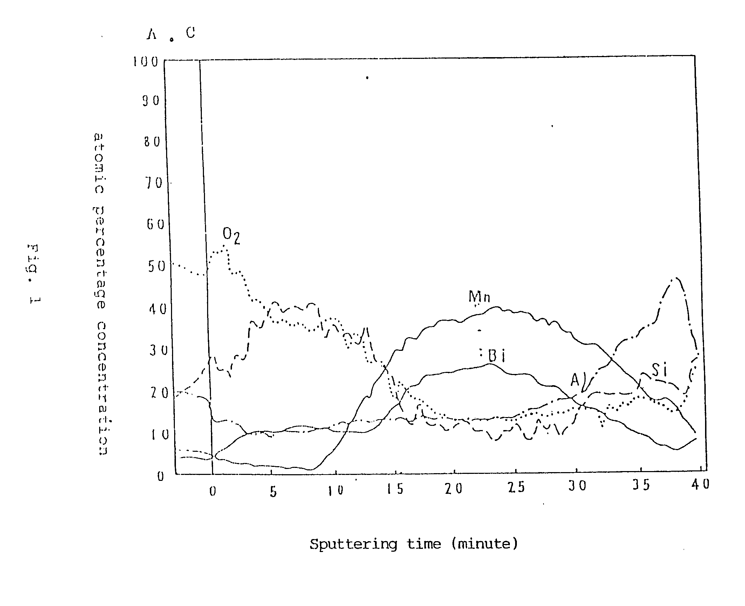

Fig. 1 shows an atomic percentage concentration of various elements in different layers of the MnBiAlSi alloy film for data storage of magneto-optical disk manufactured by the process of this present invention. The abscissa shows the delaminating time (min.) of the ma terial, representative of the various layers of the material; the ordinate shows the atomic percentage concentration.

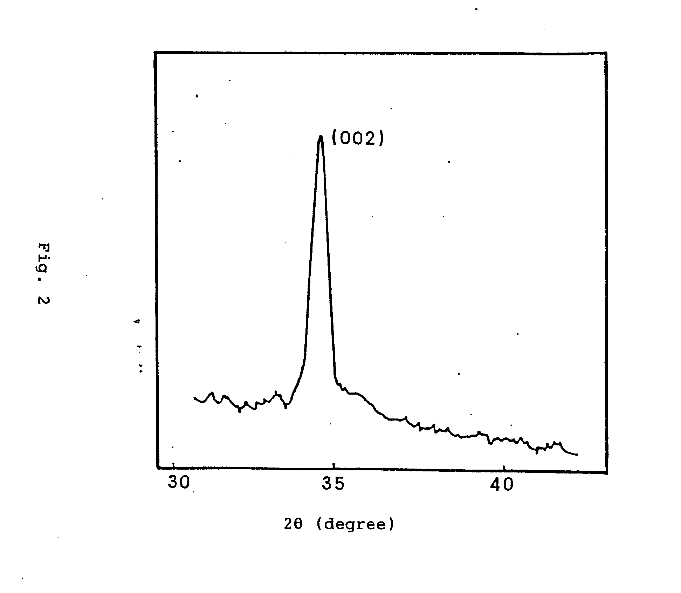

Fig. 2 shows the results of the X-ray structure analysis (CoKα target) on the MnBiAlSi alloy material for data storage of magneto-optical disks manufactured by the process of the present invention. Abscissa indicates the diffraction angle $2\theta$; ordinate shows the diffraction intensity. It can be seen from the figure that there is a peak value at $2\theta\approx35^\circ$.This indicates that the material of the present invention has a perfectly-orientated hexagonal compact crystal structure as same as MnBi, c axis is perpendicular to the base facet (002) and there is no inhomogeneity.

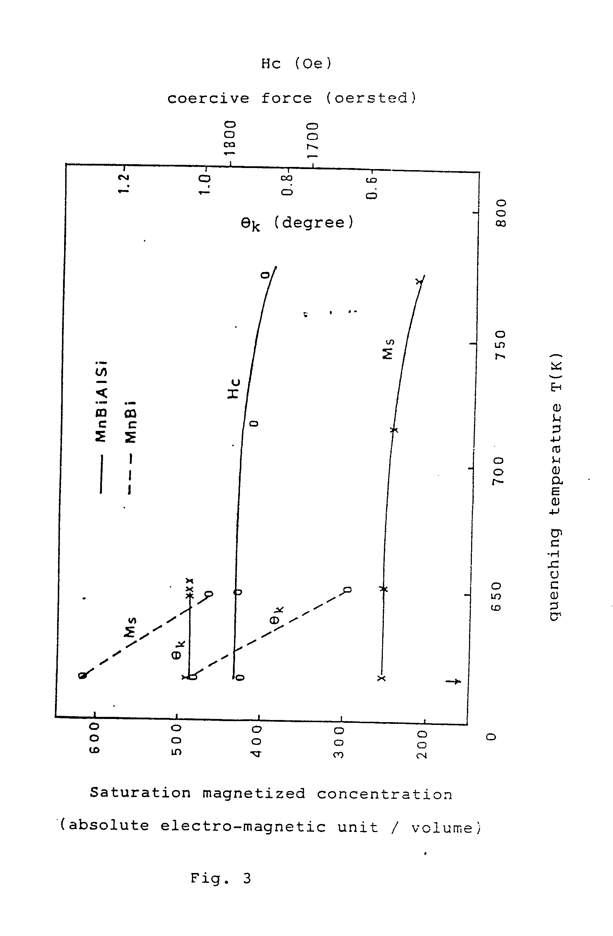

Fig. 3 shows a curve for the dependence of magneto-optical Kerr rotation $\theta k$ on quenching temperature (T), a curve for the dependence of saturation magnetization intensity (Ms) on the quenching temperature and a curve for the dependence of the coercive force (Hc) on the quenching temperature. Measured from MnBiAlSi alloy material for data storage of the magneto-optical disk manufactured by the process of the present invention.

It can be seen from the figure that the magneto-optical rotation $\theta k$, saturation magnetization Ms as well as the coercive force Hc of the alloy material in the present invention basically do not vary with the quenching temperature, while the $\theta\overset{'}{K}$ , the Ms' and the Hc' of the MnBi alloy film in the prior art weve vary greatly along with temperature.

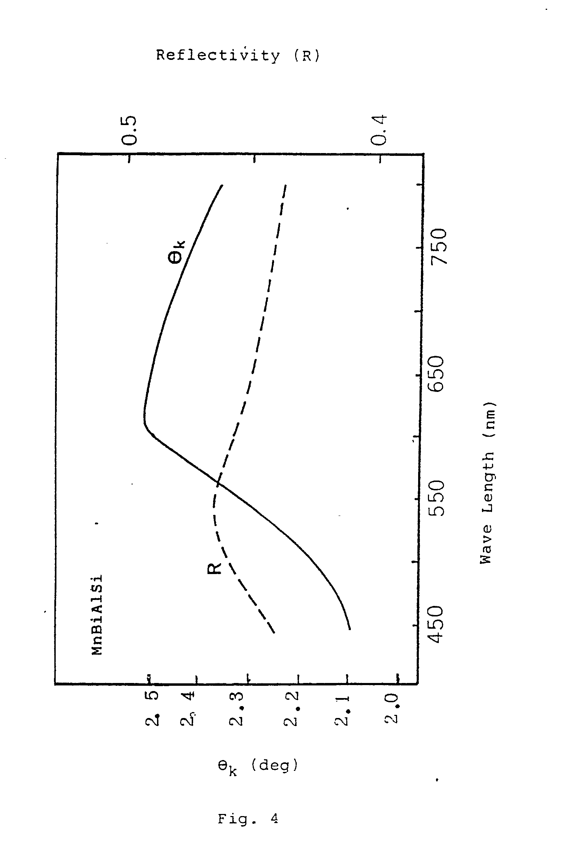

Fig. 4 shows a curve for the dependence of reflectivity on the wave length, a curve for the dependence of Kerr rotation $\theta k$ on the wave length λ measured from MnBiAlSi alloy material for data storage of the magneto-optical disks manufactured by the process of the present invention. It can be seen from the figure that at the wavelengh = 633nm, the magneto-optical preferred value $\theta k$ is very large, about more than 6 times as large as that of the amorphous TbFeCo or GdTbFeCo presently in trial use.

## Detailed Description of the Invention

A detailed description is given in the following of the alloy material of the present invention for data storage of magneto-optical disks and the manufacture process thereof.

## The alloy material for data storage of magneto-optical disks;

Fig. 1-Fig. 4 have shown various features of the alloy material for data storage of the magneto-optical disks provided by the manufacture process in the present invention. Such material includes Manganese (Mn) Bismuth (Bi) and Aluminium (Al) Silicon (Si); it is based on Mn Bi and doped with Al atoms and Si atoms. It can be expressed by molecular formula Mn1BixAlySiz of which the preferred content proportion of various elements reads as follow:

given the atom number of Mn = 1
then the atom number of Bi = X≈0.7-1.0
the atom number of Al = y≈0.2-0.5
the atom number of Si = z≈0.5-2

The various above-mentioned elements are evaporated or sputtered in sequence onto a transparent substrate under vacuum cordition in accordance with the above proportions. Glass or plastics can be used as the substrate and the plastics substrate can be for example, Polymethy, acrylate. While $SiO_2$/Mn/Bi/Al or Al/Mn/Bi/$SiO_2$ are deposited in sequence on a cleaned transparent substrate, pantaboron trinitride ($B_5N_3$) can be used instead of silicon dioxide ($SiO_2$) and $B_5N_3$/Mn/Bi/Al or Al/Mn/Bi/$B_5N_3$ are deposited in sequence to form multilayer film of the alloy material for data storage of amgneto-optical disks on the transparent substrate. The forestated multi-layer film is annealed for 3-5 hours between 300-380° C under vacuum condition and then cooled to room temperature. This film after being annealed has excellent performances.

The performance quality of the alloy material for data storage of magneto-optical disks is generally expressed and marked by the magnitude of the physical quantities indicative of the magneto-optical preferred values.

magneto-optical merit $\theta k. \sqrt{R}$
wherein $\theta$ k represents the magneto-optica Kerr rotation,
R represents the reflectivity of the material.

The larger are $\theta$ k and R, the better are mariked the performances of the alloy material for data storage of the magneto-optical disks. The magneto-optical Kerr rotation $\theta k$ of the alloy material for data storage of the magneto-optical disks in the present invention is about 2.5°, six times larger than that of the amorphous material in the prior art, it is reflectivity R is around 45%, equivalent to that in the prior art, and its crystal grain size measured is around 400 Å. The annealing temperature of the material according to the present invention drops to 300° C, so cheap magneto-optical disk base-glass substrate can be used therein. Meanwhile, the grain size (d) is made even smaller. Such smaller grain size (d) will be beneficial for signal/noise ratio S/N and thus favoring high density data storing and audio-video recording. Furthermore, it can be seen from Fig. 3 that when the temperature drops from 500° C to room temperature during quenching, the Kerr rotation $\theta k$, the saturation magnetization Ms as well as the magentic coercive force Hc of the said alloy material basically do not vary. This is favorable for repetitive uses of the material and very convenient for keeping stored data and keeping magneto-optical disks having audio video recordings for a long period of time.

Process for manufacturing the alloy material for data storage of magneto-optical disks.

Evaporation process:

A piece of transparent substrate or glass substrate or polymethy acrylate is prepared. After being cleansed, it is put into a vacuum chamber and meanswhile silicon dioxide ($SiO_2$), Manganese (Mn), Bismuth (Bi) or prefabricated Manganese Bismuth (MnBi) Alloy as well as Alluminium (Al) are put in. Their dosage is determined according to the atomic percentage proportions of the various above-mentioned elements, for example, if the dosage of Manganese (Mn) is one atom-grown then the dosage (x) of Bismuth (Bi) will be 0.7 atom gram and the dosage y of Aluminium (Al) will be 0.2-0.5 atom-gram, the dosage(z) of Silicon will be 0.5-2.0 atom gram. The purity of Manganese (Mn), Bismuth (Bi), Aluminium (Al) and Silicon dioxide ($SiO_2$) is required to be not lower than the chemical purity. When the vacuum in the chamber reaches $10^{-6}$-$10^{-7}$ Torr, Silicon dioxide ($SiO_2$), Manganese (Mn), Bismuth (Bi) and Aluminium (Al) in their own crucibles are heated respectively to a temperature slightly higher than their respective melting point, then are evaporated onto the transparent substrate in sequence to form transparent substrate/$SiO_2$/Mn/Bi/Al multilayer thin film, or aluminium (Al) is first evaporated and $SiO_2$ is lastly evaported to form transparent substrate/Al/Mn/Bi/$SiO_2$ multilayer thin film. And surely, if the order of evaporating Mn and Bi is exchanged to form transparent substrate/$SiO_2$/Bi/Mn/Al multiplayer thin film or transparent substrate/Al/Bi/Mn/$SiO_2$ multiplayer thin film, it is also feasible. After being evaporated, said thin film is annealed in the vacuum chamber at 300° C-380° C for 3-5 hours and then cooled to room temperature. Annealing will lead to a sufficient reaction of Manganese (Mn) and Bismuth (Bi) to form per fectly orientated compact hexagonal crystalline structure, with the c-axis perpendicular to the base facet (002) of the hexagon, meanwhile Silicon (Si) atoms and Aluminium (Al) atoms will diffuse into the substitial positions of the hexagonal crystal unit cell and into the crystal grain boundaries to produce the material of excellent features as shown in the figures, thus overcoming the degrad ng after high temperature quenching of the performances for the Manganese (Mn) Bismuth (Bi) alloy material in the prior art. After measurement, the thickness of the silicon dioxide ($SiO_2$) in the thin film is determined to be 1000-2000 Å, Manganese (Mn) Bisnnulh (Bi) alloy layer thereof has a thickness of 500-1000 Å and Aluminium (Al) layer thereof has a thickness of around 200 Å.

Sputtering Process:

If MnBiAlSi alloy material for data storage is manufactured by sputtering process, it is necessary to prepare Alluminium (Al) target, Silicon dioxide ($SiO_2$) target, Manganese (Mn) target and Bismulh (Bi) target first. The target preparing technique is known for the overage skilled person in the art and is unnecessary to be mentioned anymore herein.

After being cleansed, the transparent substrate or the glass substrate or the polymethy acrylate substrate is put into the sputtering chamber. When the vacuum reaches $10^{-6}$-$10^{-8}$ Torr, inert gas argon (Ar) is filled into the sputtering chamber and at an applied voltage, the argon (Ar) ions will bombard in sequency the above silicon dioxide ($SiO_2$) target, Manganese (Mn) target, Bismuth (Bi) target and Aluminicon (Al) target, or the argon (Ar) ions will first bombard the Aluminium (Al) target and then the Manganese (Mn) target, the Bismuth (Bi) target and the Silicon dioxide ($SiO_2$) target in sequence to form transparent substrate/$SiO_2$/Mn/Bi/Al thin film or transparent substrate/Al/Mn/Bi/$SiO_2$ thin film. If the bombardment order of Manganese (Mn) and Bismuth (Bi) is exchanged, then transparent substrate/Al/Bi/Mn/$SiO_2$ thin film or transparent substrate/Al/Bi/Mn/$SiO_2$ multilayer thin film can be formed. Herein the thickness of Silicon dioxide ($SiO_2$) layer is 1000-2000 Å, that of Manganese Bismuth (MnBi) layer is 500-1000 Å, and that of the Aluminium (Al) layer is around 200 Å. The sputtered thin film is put into the vacuum chamber with a vacuum of $10^{-6}$-$10^{-8}$ Torr and annealed at 300-380° C for 3-5 hours and then cooled to room temperature. Now the substrate/$SiO_2$/Mn/Bi/Al multilayer thin film or substrate/Al/Mn/Bi/$SiO_2$ multilayer thin film is well manufactured. Such multilayer thin films having the substrate/Al/Mn/Bi/$SiO_2$ structure are better alloy material for data storage of Magneto-optical disks.

If in the above manufacture process, $B_5N_3$ is used instead of $SiO_2$ without any change of other technological procedures, than substrate/BN/Mn/Bi/Al multilayer thin film or substrate/Al/Mn/Bi/BN multilayer thin film can be formed. They are similarly very nice alloy material for data storage of Magneto-optical disks.

Preferred Embodiment

A referred embodiment of manufacturing an alloy material for data storage of magneto-optical disks is introduced herewith. The sputter process is an example to manufacture a multilayer thin film of ADSMO (alloy material for data storage of magnetio-optical disk).

Firstly, it is necessary to prepare Aluminium (Al) target, silicon dioxide ($SiO_2$) target, Manganese (Mn) target and Bismuth (Bi) target.

After being cleansed, the transparent substrate such as the glass substrate is put into the sputtering chamber. When the vacuum reaches $10^{-6}$ - $10^{-8}$ Torr, inert gas argon (Ar) is filled into the sputtering chamber and ionized by an applied high voltage. The argon (Ar) ion will bambard in sequence the said Aluminum (Al) target. Aluminum (Al) is deposited onto said glass substrate. The thickness of the Aluminum (Al) layer is controlled to be about 200 Å. As the bombard time is increased, the thickness of Aluminium (Al) layer increases, and then said Monganese (Mn) target, Bismuth (Bi) target (or Bi target, Mn target is sequence) are separetely bombarded, the repetition bombarded numbers can be from 1 to more than 100, and an overlapping film of multilayer MnBi (or BiMn), MnBi (or BiMn), MnBi (or BiMn)... is formed. The total thickness is about 500-1000 Å. Finally, said silicaon dioxide ($SiO_2$) layer is sputtered, the thickness of which is about 1000-2000 Å. In this way, an overlapping multilayer thin film of glass substrate/Al/Mn/Bi/$SiO_2$ or glass substrate/Al/Bi/Mn/$SiO_2$ can be formed. The said sputtered thin film is annealed in the chamber with a vacuum of $10^{-6}$-$10^{-8}$ Torr at 300-380° C for 3-5 hours and then cooled to room temperature. Herein, the anneal temperature is 50-80° C lower than that of the formation of alloy material (MnBi). When said thin film is annealed at lower temperature, the Mangnaese (Mn), Bismuth (Bi) atoms inbetween the neighborhood can be diffused into each other, rather than be diffus within a scope of longer distance, therefere. The annealing Manganese (Mn) and Bismuth (B) at lower temprature, can form a fine and compact hexagonal crystalline structure with best orientations of crystalline structure. While the grain size(d) can be decreased to e.g., $d \approx 400$ Å, so that the noise produced by grain boundaries of said overlapping multilayer film can be reduced, and then the signal noise ratio S/N would be increased.

When annealing the over lapping multilayer thin film, the Almimum atoms and the silicon atoms occupy the interstitial sites in the maganese (Mn) Bismuth (Bi) crystal unit cell, whereby said overlapping multilayer thin film has a good temperature stability. As shown in Fig. 3, the curves of $\theta k$, Ms and Hc largely do not vary with the quenching temperature (T). It can be seen that, the preferred embodiment of the present invention overcomes the problems existing in the prior art. i.e., during annealing, the performances of said Manganese (Mn) Bismuth (Bi) become worse. And instead, said magneto-optical Kerr rotation $\theta k$ can be increased significantly, said grain size can be finer. All of these are requried for the material used for data storge of magneto-optical disks.

In summary, the magneto-optical preferred values of said alloy material for data storage of magneto-optical disks in the present invention are far better than those of the amorphous TbFeCo. The performances of said alloy material for data storage of magneto-optical disk of the present invention are also preferred than that of the MnBi crystalline alloy material. Comparing said alloy material for data storage of magneto-optical disk with the MnBi alloy material of the prior art. The present invention is characterized in: having much larger magneto-optical effect, overcoming the following shortcoming existed in MnBi, produced by being quenched, i.e. the performances become worse. Comparing with the amorphous crystal TbFeCo and GdTbFe, said material of the present invention is characterized in: having larger magneto-optical Kerr rotation $\theta k$ and being not easy to become ageing nor to be oxidized. Said material of the present invention have higher reflectivity, fine and compact crystalline oxientation, stable crystal grain structure and will not be affected by the temperature changes. Said process of manufacturing of the present invention is simple and easy to operate, has a cheaps cost suitable for large scale producing, bringing forth a bright prospect for widespread applications.

## Claims

1. An Alloy material for data storage of magneto-optical disk (ADSMO) comprising manganese (Mn), Bismuth (Bi) characterized in further comprising Aluminium (Al) and Silicon (Si) [or Boron (B)], being based on Mananese Bismuth (MnBi) alloy and doped with Aluminium (Al) atoms and silicon dioxide (SiO₂) [or panta Boron trimitriade $B_5N_3$].

2. An alloy material for data storage of magneto-optical disk (ADSMO) as defined in Claim 1, wherein said elements of Manganese (Mn), Bismuth (Bi), Aluminium (Al) and Silicon dioxide (SiO₂) are deposited onto a transparent substrate in a certain sequence to form a film with multip layer structure.

3. An alloy material for data storage of magneto-optical disk (ADSMO) as defined in Claim 1, its molecular formula being as:

$Mn_1 \cdot Bi_x \cdot Al_y \cdot Si_z$

wherein x    0.7-1.0

y    0.2-0.5

z    0.5-2.0

and a film is formed according to said atomic proportions.

4. An alloy material for data storage of magneto-optical disk (ADSMO) as difined in claim 1, wherein Boron (B) atoms, can be used instead of Silicon atoms (Si), Pantaboron trinitride ($B_5Ns$) can be used instead of Silcon dioxid (SiO₂).

5. An alloy material for data storage of magneto-optical disk (ADSMO) as defined in claim 1 wherein the certain sequence of Mn, Bi, Al and SiO₂ being deposited onto a transparent substrate is:

a transparent substrate/SiO₂/Mn/Bi/Al or a transparent substrate/SiO₂/Bi/Mn/Al.

6. An alloy material for data storage of magneto-optical disk (ADSMO) as defined in claim 5, wherein the overlapping layer number of MnBi (or BiMn) are from 1 to more than 100.

7. An alloy material for data storage of magneto-optical disk (ADSMO) as defined in cliam t, wherein the certain sequence of Mn, Bi, Al, SiO₂ being deposited onto a transparent substrate is:

a transparent substrate/Al/Mn/Bi/SiO₂ or a transparent substrate/Al/Bi/Mn/SiO₂.

8. An alloy material for data storage of mangeto-optical disk (ADSMO) as defined in claim 7, wherein the overlapping layer numbers of MnBi (or BiMn) are from 1 to more than 100.

9. An alloy material for data storage of magneto-optical disk (ADSMO) as defined in Claim 3, wherein the material of the transparent substrate is a glass substrate.

10. An alloy material for data storage of magneto- optical disk (ADSMO) as defined in claim 3, wherein the material of the transparent substrate is a plastics substrate such as polymethylacrylate.

11. An alloy material for data storage of magneto-optical disk (ADSMO) as defined in claim 1, wherein the purity of the elements is at least not lower than the chemical purity.

12. A process of manufacturing an alloy material for data storage of magneto-optical disk (ADSMO) comprising steps as follows:

(1) preparing a transparent substrate and characterized in:

(2) depositing Mn, Bi, Al and SiO₂ respectively on to said transparent substrate in a certain sequence and forming a multi-layer films;

(3) annealing said multi-layer film at temperature 300-380 ° C in a vaccum chamber for 3-5 hours, and then cooling said multi-layer films until room temperature.

13. A process of manufacturing an alloy material for data storage of magneto-optical disk (ADSMO) as defined in claim 12, wherein said certain sequence of depositing Mn, Bi, Al and SiO$_2$ onto said transparent substrate is:
   (1) depositing a layer SiO$_2$;
   (2) depositing a layer Mn (or Bi);
   (3) depositing a layer Bi (or Mn);
   (4) depositing a layer Al.

14. A process of manufacturing an alloy material for data storage of magneto-optical disk (ADSMO) as defined in claim 12, wherein said certain sequence of depositing Mn, Bi, Al, SiO$_2$ onto said transparent substrate is:
   (1) depositing a layer Al;
   (2) depositing a layer Mn (or Bi);
   (3) depositing a layer Bi (or Mn);
   (4) depositing a layer SiO$_2$.

15. A process of manufacturing an alloy material for data storage of magneto-optical disk (ADSMO) as defined in claim 12, wherein the number of depositing MnBi (or BiMn) can be from 1 to more than 100, and a multip-layer overlapping films is formed.

16. A process of manufacturing an alloy material for data storage of magneto-optical disk (ADSMO) as defined in claim 12, wherein evaporation method is used in a vacuum chamber for depositing said Mn, Bi, Al, SiO$_2$ onto said transparent substrate in said certain sequence.

17. A process of manufacturing an alloy material for data storage of magneto-optical disk (ADSMO) as defined in claim 12, wherein sputtering method is used in a vacuum chamber of depositing said Mn, Bi, Al. SiO$_2$ onto said transparent substrate in said certain sequence.

18. A process of manufacturing an alloy material for data storage of magneto-optical disk (ADSMO) comprising steps as follows:
   (1) preparing a transparent substrate; characterized in that:
   (2) respectively depositing Mn, Bi, Al and B$_5$N$_3$ onto said transparent substrate in a certain sequence and forming a multi-layer films;
   (3) anealing said multi-layer films at temperature 300-380 ° C in a vaccum chamber for 3-5 hours, and then cooling said multi-layer films until room temperature.

19. A process of manufacturing an alloy material for data storage of magneto-optical disk as defined in claim 18, wherein said certain sequence of depositing Mn, Bi, Al and B$_5$N$_3$ onto said transparent substrate is:
   (1) depositing a layer B$_5$N$_3$;
   (2) depositing a layer Mn (or Bi);
   (3) depositing a layer Bi (or Mn);
   (4) depositing a layer Al.

20. A process of manufacturing an alloy material for data storage of magneto-optical disk (ADSMO) as defined in claim 18, wherein said certain sequence of depositing Mn, Bi, Al and B$_5$N$_3$ onto said transparent substrate is:
   (1) depositing a layer Al;
   (2) depositing a layer Mn (or Bi);
   (3) depositing a layer Bi (or Mn);
   (4) depositing a layer B$_5$N$_3$.

21. A process of manufacturing an alloy material for data storage of magneto-optical disk (ADSMO) as deined in claim 18, the number of depositing MnBi(or BiMn) can be from 1 to more than 100 and a multi-layer overlapping films are formed.

22. A process of manufacturing an alloy material for data storage of magneto-optical disk (ADSMO) as defined in claim 18, wherein an evaporation method is used in a vacuum chamber for depositing said Mn, Bi, Al and B$_5$N$_3$ onto said transparent substrate in said certain sequence.

23. A process of manufacturing an alloy material for data storage of magneto-optical disk (ADSMO) as defined in claim 18, wherein a sputtering method is used in a vaccum chamber for depositing said Mn, Bi, Al and B$_5$N$_3$ onto said transparent substrate in said certain sequence.

24. A process of manufacturing an alloy material for data storage of magneto-optical disk (ADSMO) as defined in claim 18, wherein the purity of said Mn, Bi, Al and B$_5$N$_3$ is at least not lower than chemcial purity.

Fig. 1

A . C

atomic percentage concentration

100
90
80
70
60
50
40
30
20
10
0

O$_2$

Mn

Bi

Al

Si

0    5    10    15    20    25    30    35    40

Sputtering time (minute)

(002)

2θ (degree)

Fig. 2

Fig. 3

Fig. 4